# EUROPEAN PATENT APPLICATION

(11) **EP 4 796 515 A1**
(43) Date of publication of application: **26.08.2026**
(21) Application number: 24879833.2
(22) Date of filing: 18.10.2024
(51) Int. Cl.: C04B 35/587

(54) **SILICON NITRIDE-BASED SINTERED COMPACT AND METHOD FOR PRODUCING SAME**

(30) Priority: 20.10.2023 JP 2023181248
(71) Applicant: Nippon Steel Corporation, Tokyo 100-8071 (JP)
(72) Inventor: NAKABAYASHI, Masashi, Tokyo 100-8071 (JP); NARIKI, Shinya, Tokyo 100-8071 (JP); SATO, Yutaka, Kitakyushu-shi, Fukuoka 806-8586 (JP); ISHITOBI, Keigo, Kitakyushu-shi, Fukuoka 806-8586 (JP); HIRAMATSU, Shingo, Kitakyushu-shi, Fukuoka 806-8586 (JP)
(74) Representative: Vossius & Partner Patentanwälte Rechtsanwälte mbB
(86) International application number: PCT/JP2024/037224
(87) International publication number: WO 2025/084413

(57) **Abstract**

Disclosed is a technique for increasing brightness on the surface of a silicon nitride sintered body. The silicon nitride sintered body of the present disclosure has multiple crystal grains and a grain boundary phase that bonds the crystal grains together, wherein the sintered body has an L* value of 55 or greater on at least a portion of a surface of the sintered body and has a thickness of 10 mm or greater. The silicon nitride sintered body of the present disclosure can be obtained by kneading silicon nitride powder and secondary starting powder to obtain granules, and then molding the granules and firing them under specified conditions.

## Description

### FIELD

The present application discloses a silicon nitride sintered body and a method for its production.

### BACKGROUND

Silicon nitride sintered bodies are used for various types of structural materials (PTLs 1 to 4). Silicon nitride sintered bodies generally have a uniform color tone of black or dark gray. Sintered silicon nitride bodies characterized by grayish white or white color have been disclosed as well. For example, PTL 5 discloses a silicon nitride sintered body obtained by sintering a powder comprising a mixture of 1 to 25 wt% oxide powder with silicon nitride powder, wherein the L* value of the color tone of the sintered body is greater than 50. PTL 6 discloses a silicon nitride sintered body having a brightness L* value of 40 to 85 on the surface or a cross-section, and having a carbon component content of 5000 ppm or lower, a total content of W, Fe, Cr or Mo of 2000 ppm or lower, and a Ti nitride content of 5 to 50 wt%. PTL 7 discloses a silicon nitride sintered body composed mainly of silicon nitride and having an apparent brightness VS of 3.0 to 9.0 on the surface, where VS is brightness according to the color display method specified by JIS-Z8721. PTL 8 discloses a silicon nitride sintered body having a thermal conductivity of 60 W/(m·K) or greater, a thermal expansion coefficient of 3.4 × 10⁻⁶/K or lower in the range of room temperature to 1000°C, and a color tone L* value in the range of 0 to 80. PTL 9 discloses a sintered body with a main phase of silicon nitride, being a sintered ceramic wherein the mean and maximum values for the circle equivalent diameters in the grain boundary phase on the surface are 0.05 µm to 0.3 µm and 0.8 µm or less, respectively, and the color tone L* value is a maximum of 70. PTL 10 discloses a silicon nitride substrate with a color tone L* value of 70 or greater.

### [CITATION LIST]

### [PATENT LITERATURE]

[PTL 1] Japanese Unexamined Patent Publication No. 2004-059346
[PTL 2] Japanese Unexamined Patent Publication No. H09-227240
[PTL 3] Japanese Patent Publication No. 5289090
[PTL 4] Japanese Unexamined Patent Publication No. 2003-267786
[PTL 5] Japanese Unexamined Patent Publication No. H02-76607
[PTL 6] Japanese Unexamined Patent Publication No. 2001-114565
[PTL 7] Japanese Unexamined Patent Publication No. 2001-146480
[PTL 8] Japanese Unexamined Patent Publication No. 2010-189207
[PTL 9] Japanese Unexamined Patent Publication No. 2014-129223
[PTL 10] Japanese Unexamined Patent Publication No. 2023-123942

### SUMMARY

### [TECHNICAL PROBLEM]

Black color has high absorption efficiency for light energy. Therefore when a silicon nitride sintered body is used as a furnace interior member such as a walking beam or roller in a heating furnace, heat gets absorbed by the silicon nitride sintered body, and such absorption can potentially adversely affect the quality of the heated target. In addition, since heat dissipates out of the furnace through beams or rollers, the energy efficiency of the heating furnace is also reduced. The prior art is still in need of improvement from the standpoint of surface brightness of silicon nitride sintered bodies. When a silicon nitride sintered body is employed as a structural part for a machine or equipment, it is necessary for the silicon nitride sintered body to have a consistent thickness. While it has become possible to produce small (thin) silicon nitride sintered bodies by the prior art, producing them with sufficient thicknesses has been difficult. The present application discloses a silicon nitride sintered body having brightness that has not been obtainable with conventional industrially produced silicon nitride sintered bodies, while also having a thickness that can be applied for various structural parts, as well as a method for producing it.

### [SOLUTION TO PROBLEM]

The technology of the disclosure encompasses the following aspects.
<Aspect 1> A silicon nitride sintered body,
   having multiple crystal grains and a grain boundary phase that bonds the crystal grains together,
   having an L* value of 55 or greater on at least a portion of a surface of the sintered body, and
   having a thickness of 10 mm or greater.
<Aspect 2> The silicon nitride sintered body according to aspect 1,
   having an L* value of 60 or greater on at least a portion of the surface.
<Aspect 3> The silicon nitride sintered body according to aspect 1 or 2, wherein
   the total content of Al, Fe, Co and Ni is less than 1000 ppm and
   the SiC content is less than 2000 ppm.
<Aspect 4> The silicon nitride sintered body according to any one of aspects 1 to 3, wherein
   the grain boundary phase contains a crystalline component.
<Aspect 5> The silicon nitride sintered body according to aspect 4, wherein
   the grain boundary phase contains, as the crystalline component, one or more selected from the group consisting of Si₂N₂O, Y₂Si₂O₇, Yb₂Si₂O₇, Y₂Si₃O₃N₄ and YbSi₃O₃N₄.
<Aspect 6> A method for producing the silicon nitride sintered body according to any one of aspects 1 to 5, the method comprising:
   kneading silicon nitride powder and secondary starting powder to obtain granules, and
   molding and firing the granules,
   wherein
   the maximum temperature during firing is 1720°C or higher and lower than 1830°C,
   the atmosphere at 1700°C or higher during temperature increase in the firing period comprises nitrogen gas at 99.9 vol% or greater and has an absolute pressure of 0.3 MPa or higher and lower than 1.1 MPa,
   when the maximum temperature is lower than 1770°C, the time required for temperature increase from 1700°C to the maximum temperature during the firing period is 60 to 180 minutes,
   when the maximum temperature is 1770°C or higher, the time required for temperature increase from 1700°C to 1770°C during the firing period is 60 to 180 minutes and the time required for temperature increase from 1770°C to the maximum temperature is 70 minutes or less, and
   the holding time at the maximum temperature during the firing period is 16 hours or less.
<Aspect 7> The method for producing the silicon nitride sintered body according to aspect 6, wherein the method comprises molding and firing the granules to obtain a sintered body, and then subjecting the sintered body to surface treatment to expose a surface with an L* value of 55 or greater.
<Aspect 8> A method for producing the silicon nitride sintered body according to any one of aspects 1 to 5, the method comprising:
   kneading silicon nitride powder and secondary starting powder to obtain granules, and
   molding and firing the granules,
   wherein
   the maximum temperature during firing is 1830°C or higher,
   the atmosphere at 1700°C or higher during temperature increase in the firing period comprises nitrogen gas at 99.9 vol% or greater and has an absolute pressure of 0.3 MPa or higher and lower than 1.1 MPa,
   the time required for temperature increase from 1700°C to 1770°C during the firing period is 60 to 180 minutes, and
   the holding time at the maximum temperature during the firing period is 4 to 16 hours.

### [EFFECTS OF INVENTION]

The silicon nitride sintered body of the disclosure has high surface brightness (L* value) compared to a conventional silicon nitride sintered body. A material with a high L* value has a low emission ratio, and therefore when used as an interior member of a heating furnace, for example, the heat-insulating effect is increased and the furnace energy efficiency is improved. Materials that may be used in heating furnaces with air atmospheres include known oxide materials with high L* values, such as alumina and silica, but such oxides produce oxygen deficiency in inert atmospheres, and result in change to lower L* values. In contrast, the silicon nitride sintered body of the disclosure is resistant to compositional change even under high temperature in an inert atmosphere, and thus maintains a high L* value. When exposed to high temperature in an oxidizing atmosphere, on the other hand, a silica phase with a high L* value is formed on the surface, and therefore high insulation performance can be exhibited even in an oxidizing atmosphere furnace or in an inert atmosphere furnace. Moreover, since the silicon nitride sintered body of the disclosure has a thickness of 10 mm or greater, it can be applied for various types of structural parts.

### BRIEF DESCRIPTION OF DRAWINGS

Fig. 1A is a schematic diagram showing the thickness of a silicon nitride sintered body.
Fig. 1B is a schematic diagram showing the thickness of a silicon nitride sintered body.
Fig. 1C is a schematic diagram showing the thickness of a silicon nitride sintered body.
Fig. 1D is a schematic diagram showing the thickness of a silicon nitride sintered body.
Fig. 2 is a schematic diagram showing an example of a silicon nitride sintered body.
Fig. 3 is a schematic diagram showing an example of a silicon nitride sintered body.
Fig. 4 is a schematic diagram showing an example of procedural flow in a method for producing a silicon nitride sintered body.
Fig. 5 is a schematic diagram showing an example of procedural flow in a method for producing a silicon nitride sintered body.
Fig. 6 is a schematic diagram illustrating shapes and color measurement surfaces before and after machining of the silicon nitride sintered bodies of Examples 1 to 3 and Comparative Examples 1 and 2.
Fig. 7 is a schematic diagram illustrating shapes and color measurement surfaces of the silicon nitride sintered bodies of Examples 1 to 3 after additional processing.

### DESCRIPTION OF EMBODIMENTS

Embodiments of the silicon nitride sintered body and process for its production will now be explained with reference to the accompanying drawings. However, the disclosed silicon nitride sintered body and process for its production are not limited to the embodiments described below.

### 1. Silicon nitride sintered body

The silicon nitride sintered body of the disclosure has multiple crystal grains and a grain boundary phase that bonds the crystal grains together, wherein the sintered body has an L* value of 55 or greater on at least a portion of a surface of the sintered body and has a thickness of 10 mm or greater.

### 1.1 Crystal grains

The silicon nitride sintered body of the disclosure has multiple crystal grains bonded together via a grain boundary phase. That the multiple crystal grains are bonded via a grain boundary phase can be confirmed from a microscope image of the material structure. Each crystal grain comprises silicon nitride. Each of the crystal grains may also contain impurities. The types of impurities in the crystal grains will depend on the types of impurities in the starting materials before sintering, the types of secondary starting materials, and the atmosphere during firing. For example, the crystal grains composing the silicon nitride sintered body may include metal elements other than Si, such as Al, Fe, Co or Ni. The crystal grains composing the silicon nitride sintered body may also contain compounds other than silicon nitride, such as silicon carbide (SiC). The sizes of the crystal grains in the silicon nitride sintered body of the disclosure are not particularly restricted. The sizes of the crystal grains will depend on the particle sizes and firing conditions for the starting material before sintering (for example, silicon nitride powder).

High-purity silicon nitride crystals exhibit virtually no absorption of visible light. Specifically, when the crystal grains of a silicon nitride sintered body (polycrystals) are of high purity and contain no impurities, then the sintered body is expected to exhibit a white-grayish white color. However, an actual silicon nitride sintered body will generally exhibit a uniform black or dark gray color tone. This is because when metal elements such as Al, Fe, Co or Ni exist as solid solution in silicon nitride crystals, the electron energy levels formed by the solid solution element act as "color centers" to produce a broad absorption spectrum, and the silicon nitride crystals exhibit dark gray-black color overall (Al₂O₃-dissolved silicon nitride is known as SiAlON, but this will also be referred to herein as "silicon nitride"). The same applies for the grain boundary phase of sintered bodies (polycrystals), which also exhibit a dark color similar to when the elements mentioned above are present. A dark color also tends to be exhibited even when the grain boundary phase is amorphous, as explained below. When the silicon nitride sintered body contains SiC, the sintered body naturally exhibits darker color.

Thus, when silicon nitride is replaced with certain elements (such as the metal elements mentioned above), a darker crystal color results. SiC contamination in the crystals is also a cause of coloration. In the silicon nitride sintered body of the disclosure, the crystal grains themselves may also exhibit some degree of color so long as at least the aforementioned specified brightness is ensured in at least part of the surface. However, minimizing coloration of the crystal grains themselves will tend to increase the brightness of the sintered body as a whole. The present inventors have found that when the total content of Al, Fe, Co and Ni in the silicon nitride sintered body is less than 1000 ppm and the SiC content is less than 2000 ppm, this tends to result in notably higher brightness of the sintered body as a whole. The total content of Al, Fe, Co and Ni in the silicon nitride sintered body may be 750 ppm or less, 500 ppm or less, 250 ppm or less, 100 ppm or less or 50 ppm or less. The SiC content of the silicon nitride sintered body may be 1000 ppm or less, 750 ppm or less, 500 ppm or less, 250 ppm or less, 100 ppm or less or 50 ppm or less.

The silicon nitride sintered body may comprise silicon nitride crystal grains at 80 mass% or greater and less than 100 mass%, or at 80 mass% to 97 mass%, for example. The remainder may be a grain boundary phase having a composition other than silicon nitride. The silicon nitride crystal grain content can be measured by X-ray diffraction, using a calibration curve.

### 1.2 Grain boundary phase

The grain boundary phase may be one composed of a material capable of bonding together the crystal grains. The grain boundary phase may be a glass phase, a crystal phase, or a mixed phase comprising a glass phase and a crystal phase. For the silicon nitride sintered body of the disclosure, however, it is important to control the color tone of the grain boundary phase. As mentioned above, it is important to control the nitrogen content in addition to lowering the concentration of impurities and SiC. A deficiency or excess of nitrogen atoms is another cause of color centers, tending to result in a broader absorption spectrum, i.e. reduction in the brightness difference of the sintered body. Moreover, while the grain boundary phase may be a glass phase or a crystal phase as mentioned above, a glass phase is essentially non-stoichiometric and tends to result in color tone variation. In other words, a higher proportion of glass phase in the grain boundary phase makes it difficult to control the color tone of the grain boundary phase and tends to lower the brightness of the sintered body as a whole. The present inventors have found that it is easy to control the color tone if all or a portion of the grain boundary phase is a crystal phase. That is, if the grain boundary phase comprises a crystalline component, the color tone of the sintered body as a whole is easier to control and it tends to be easier to maintain the aforementioned high brightness.

The type of crystalline component will depend on the types of secondary starting materials (such as sintering aids) before sintering, for example. As explained below, if a suitable secondary starting material is employed and the firing conditions allow production of crystalline components in the grain boundary phase, then the grain boundary phase will contain a crystalline component. The present inventors have found that when the grain boundary phase comprises at least one compound selected from the group consisting of Si₂N₂O, Y₂Si₂O₇, Yb₂Si₂O₇, Y₂Si₃O₃N₄ and YbSi₃O₃N₄ as a crystalline component, the color of the grain boundary phase is significantly lightened and the high brightness specified above can be more easily ensured.

### 1.3 Brightness

The silicon nitride sintered body of the disclosure has an L* value of 55 or greater based on the L*a*b* (L-star, a-star, b-star) color system (used in JIS Z 8781-4), on at least a portion of the surface of the sintered body. If at least a portion of the surface of the silicon nitride sintered body has at least this level of brightness, then the absorption efficiency for light energy (heat absorption efficiency) on the surface will be reduced, thus possibly widening the range of uses for the silicon nitride sintered body. For example, when a silicon nitride sintered body is used as a furnace interior member such as a walking beam or roller in a heating furnace, the surface of the silicon nitride sintered body with high brightness faces the inside of the furnace, and thereby inhibits absorption of heat by the silicon nitride sintered body and reduces adverse effects on the quality of the heating target. This can also reduce heat dissipation out of the furnace through beams or rollers, improving the energy efficiency of the heating furnace. From the viewpoint of further increasing these effects, it may be considered preferable for the surface of the silicon nitride sintered body to have higher brightness. In this regard, the silicon nitride sintered body of the disclosure may have an L* value of 55 or greater, 57 or greater, 59 or greater or 60 or greater on at least a portion of the surface. Most preferably, it has an L* value of 60 or greater on at least a portion of the surface. There is no particular restriction on the upper limit for the L* value. The L* value may be 75 or lower or 70 or lower, for example.

The silicon nitride sintered body of the disclosure may also have an L* value of 55 or greater, 57 or greater, 59 or greater or 60 or greater on a portion of the surface. Alternatively, the silicon nitride sintered body of the disclosure may have an L* value of 55 or greater, 57 or greater, 59 or greater or 60 or greater over the entire surface. The silicon nitride sintered body of the disclosure may also have an L* value of 55 or greater, 57 or greater, 59 or greater or 60 or greater in an area of 50% to 100% of the surface. Alternatively, the silicon nitride sintered body of the disclosure may have, for example, a first section with a relatively high L* value and a second section with a relatively low L* value, in which case the L* value in the first section may be 55 or greater, 57 or greater, 59 or greater or 60 or greater, and the L* value in the second section may be 55 or lower, 53 or lower, 50 or lower, 47 or lower or 45 or lower.

### 1.4 Thickness

When a sintered ceramic is to be applied in a structural part of a machine or equipment, and especially a part subjected to heat or stress, the sintered ceramic must have a constant thickness. This is because a sintered ceramic includes defects such as pores, which significantly reduces the strength and reliability in thin parts. In this regard, the silicon nitride sintered body of the disclosure has a thickness of 10 mm or greater and can therefore be applied in various types of structural parts. The thickness of the silicon nitride sintered body of the disclosure may be 15 mm or greater, 20 mm or greater, 25 mm or greater, 30 mm or greater, 35 mm or greater or 40 mm or greater. There is no particular restriction on the upper limit for the thickness of the silicon nitride sintered body of the disclosure. A larger thickness of the sintered body will generally make it difficult to obtain a uniform density for the molded body used to fabricate the sintered body, and will also make it difficult to cause diffusion of pores from the center of the sintered body to the surface during firing. In other words, a greater thickness of the sintered body makes it difficult to ensure uniformity of its properties. From this viewpoint, the silicon nitride sintered body of the disclosure may have a thickness of 80 mm or smaller, for example. If the thickness of the silicon nitride sintered body is 80 mm or less, it will be easier to obtain a sintered body having uniform properties as a whole. The thickness of the silicon nitride sintered body of the disclosure may be 10 mm to 80 mm, 15 mm to 75 mm, 20 mm to 70 mm, 25 mm to 65 mm or 30 mm to 60 mm. When a ceramic part with a thickness of greater than 80 mm is required, the ceramic part can be constructed as a sintered body with a hollow structure, or as a combination of different types of sintered bodies.

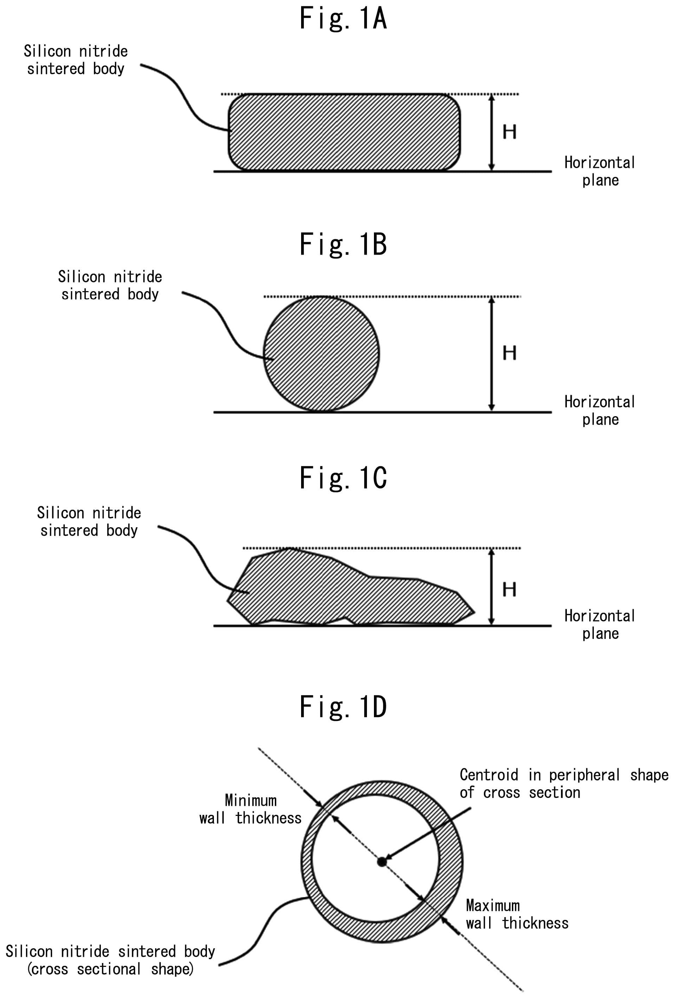

For the purpose of the present application, specifying that the silicon nitride sintered body "has a thickness of 10 mm" means that when the sintered body has a shape without a hollow section (a shape other than a pipe), as illustrated in Figs. 1A to C, the vertical height H of the sintered body (the highest point of the sintered body) is 10 mm or greater when the sintered body has been set on the horizontal plane so as to minimize the vertical height, and when the sintered body has a shape with a hollow section (a pipe shape), as illustrated in Fig. 1D, the "maximum wall thickness" of the sintered body is 10 mm or greater. More specifically, when the sintered body is flat (also including a curved sheet form), the thickness of the sheet is 10 mm or greater, when the sintered body is spherical, the spherical diameter is 10 mm or greater, when the sintered body is square columnar or cylindrical, the minimum dimension from among the diameter, side and height of the column is 10 mm or greater, when the sintered body is conical, the minimum dimension from among the height of the cone and the diameter of the circular base is 10 mm or greater, and when the sintered body is pipe-shaped, the maximum wall thickness of the pipe is 10 mm or greater. The "maximum wall thickness" of a pipe-shaped sintered body is the maximum wall thickness of the pipe on a straight line drawn passing through the centroid of the outer peripheral shape of a cross-section of the pipe-shaped sintered body, as shown in Fig. 1D.

### 1.5 Specific examples

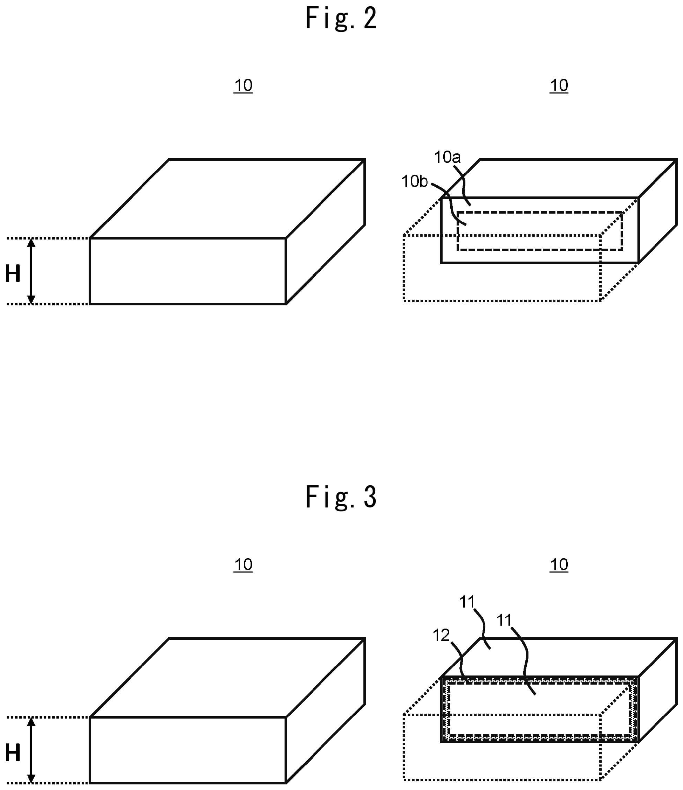

Figs. 2 and 3 show specific examples of silicon nitride sintered bodies each having at minimum specified L* value on the surface.

### 1.5.1 First mode

The silicon nitride sintered body of the first mode has an L* value of 55 or greater on at least a portion of the surface, and an L* value of 55 or greater in at least a portion of a cross-section. For example, as shown in Fig. 2, both the surface and cross-section of the silicon nitride sintered body 10 of the first mode may comprise a plane with an L* value of 55 or greater, with neither the surface nor the cross-section requiring a section with an L* value of less than 55. The silicon nitride sintered body 10 of the first mode may also have an L* value of 55 or greater at the centroid of at least one cross-section. The silicon nitride sintered body 10 of the first mode may also have an L* value of 55 or greater for at least a portion of a center section 10b, where the region up to 3 mm from the surface is defined as the surface layer section 10a and the region other than the surface layer section 10a is defined as the center section 10b. The silicon nitride sintered body of the first mode also has a vertical height H (highest point of the sintered body) of 10 mm or greater when the sintered body is set on the horizontal plane so as to minimize the vertical height of the sintered body.

### 1.5.2 Second mode

The silicon nitride sintered body of the second mode has an L* value of 55 or greater on at least a portion of the surface, while also having a section with a relatively low L* value in at least a portion of a cross-section. That is, as shown in Fig. 3, the silicon nitride sintered body 10 of the second mode may have a surface comprising a first section 11 with a relatively high L* value, and a cross-section comprising a first section 11 with a relatively high L* value and a second section 12 with a relatively low L* value. The silicon nitride sintered body of the second mode also has a vertical height H (highest point of the sintered body) of 10 mm or greater when the sintered body is set on the horizontal plane so as to minimize the vertical height of the sintered body.

### 1.6 Other aspects

The silicon nitride sintered body of the disclosure may be one having the crystal grains and grain boundary phase described above, and having the aforementioned brightness on at least a portion of the surface. The silicon nitride sintered body may comprise silicon nitride at 80 mass% or greater and lower than 100 mass%, or at 80 mass% or greater and lower than 97 mass%, for example. The silicon nitride sintered body of the disclosure may also be applied in various forms, depending on the purpose of use. The silicon nitride sintered body may be applied for special purposes immediately after sintering, or it may be applied for special purposes after surface treatment following sintering.

### 2. Method for producing silicon nitride sintered body

The present inventors have found that a silicon nitride sintered body having the high brightness described above on at least a portion of the surface can be produced by controlling temperature increase, especially during the firing step. The following production method is an example of a method for producing the silicon nitride sintered body of the disclosure.

### 2.1 First mode

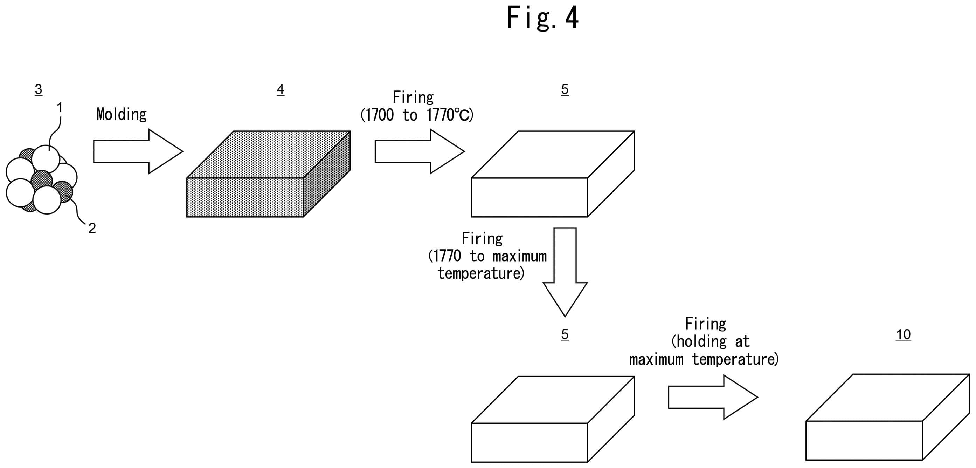

As shown in Fig. 4, the method for producing the silicon nitride sintered body according to the first mode is characterized by comprising:
kneading silicon nitride powder 1 and secondary starting powder 2 to obtain granules 3, and
molding and firing the granules 3,
wherein
the maximum temperature during firing is 1720°C or higher and lower than 1830°C,
the atmosphere at 1700°C or higher during temperature increase in the firing period comprises nitrogen gas at 99.9 vol% or greater and has an absolute pressure of 0.3 MPa or higher and lower than 1.1 MPa,
when the maximum temperature is lower than 1770°C, the time required for temperature increase from 1700°C to the maximum temperature during the firing period is 60 to 180 minutes,
when the maximum temperature is 1770°C or higher, the time required for temperature increase from 1700°C to 1770°C during the firing period is 60 to 180 minutes and the time required for temperature increase from 1770°C to the maximum temperature is 70 minutes or less, and
the holding time at the maximum temperature during the firing period is 16 hours or less.

### 2.1.1 Silicon nitride powder

The silicon nitride powder 1 may be produced by a known method. The present inventors have found that a higher purity of the silicon nitride powder 1 tends to result in a higher L* value for the finally obtained sintered body as a whole. In this regard, the purity of the silicon nitride powder 1 may be 98.80% or higher or 98.95% or higher. The size of the silicon nitride powder 1 is not particularly restricted.

### 2.1.2 Secondary starting powder

It is difficult to accomplish sintering with silicon nitride powder 1 alone. Therefore, secondary starting powder 2 is mixed together with the silicon nitride powder 1 for production of the silicon nitride sintered body 10. The secondary starting material used is one that can withstand the firing conditions described below. Using a secondary starting material can also produce a desired crystalline component in the grain boundary phase. If the melting point or softening point of the secondary starting material is too low, melting may occur when firing is carried out under the firing conditions described below, potentially interfering with production of the sintered body. When using a secondary starting material with a low melting point or softening point, lowering the firing temperature so as not to exceed the melting point or softening point of the secondary starting material may make it impossible to reach the maximum temperature of 1720°C or higher and lower than 1830°C which is necessary for the invention, and it may become impossible to produce the desired crystalline component in the grain boundary phase, tending to result in blackening of the sintered body as a whole. In this regard, the secondary starting material is preferably selected so as to produce the desired crystalline component in the grain boundary phase when fired under the firing conditions described below. The secondary starting material may include one or more compounds selected from among Si-containing compounds (such as silicon oxide), Y-containing compounds (such as yttrium oxide) and Yb-containing compounds (such as ytterbium oxide).

### 2.1.3 Kneading and granulation of powder

As shown in Fig. 4, kneading of the silicon nitride powder 1 and the secondary starting powder 2 produces granules 3 comprising silicon nitride powder 1 and secondary starting powder 2. The mixing ratio of the silicon nitride powder 1 and the secondary starting powder 2 may be determined as appropriate for the desired sintered body performance. The method for kneading and granulating the silicon nitride powder 1 and secondary starting powder 2 is also not particularly restricted. For example, the silicon nitride powder 1 and secondary starting powder 2 may be mechanically mixed together with a binder, dispersion material and solvent to obtain a slurry, and the slurry may then be dried by spray drying to allow kneading and granulation of the silicon nitride powder 1 and secondary starting powder 2. The types of binder, dispersing agent and solvent used in this case are not particularly restricted. The size of the granules 3 are also not particularly restricted.

### 2.1.4 Molding and firing of granules

The granules 3 are molded before firing, as illustrated in Fig. 4. As mentioned above, the sintered body 10 of the disclosure has a thickness of 10 mm or greater. Therefore, when the granules 3 are molded to obtain an unfired body 5, the thickness of the unfired body 5 is also greater than 10 mm. The granules 3 may be molded by publicly known molding means. The molding means may be selected as appropriate for the desired shape of the sintered body. For example, the granules 3 may be packed into a die and press molded, or they may be press molded by hydrostatic pressing, or a combination of these. The molded body (green body) 4 is fired under the conditions described above to obtain a sintered body 10. The molded body at the point after the start of firing until completion of firing (complete sintering) will hereunder be referred to as the "unfired body 5".

The sections of the unfired body 5 that are to serve as the grain boundary phase of the silicon nitride sintered body undergo nitriding during the firing process. The present inventors have found that nitriding of the grain boundary phase is insufficient in a temperature range below 1700°C, but that in a temperature range of 1700°C or higher during the firing step, nitrogen infiltrates into the interior of the unfired body 5 resulting in replacement of atoms such as oxygen with nitrogen, so as to cause formation of a stable grain boundary phase composition (a crystalline-containing phase) and disappearance of color centers, thereby increasing the L* value. The L* value inside the unfired body 5 increases by this mechanism, but an excessive amount of nitrogen is supplied near the surface, producing a composition with excess nitrogen and allowing color centers to be re-generated. In other words, while the L* value increases inside the unfired body 5, the L* value tends to decrease near the surface.

### 2.1.4.1 Time required for temperature increase from 1700°C to 1770°C

The present inventors have found that L* value increase and L* value decrease proceed simultaneously by the aforementioned mechanism at the respective sections of the unfired body 5 during the firing process, but that in the temperature range from 1700°C to 1770°C it is L* value increase that takes place preferentially in the unfired body 5 as a whole. If the time required for increase from 1700°C to 1770°C is too short, densification will proceed without sufficient infiltration of nitrogen into the interior of the unfired body 5, thus lowering the L* value of the finally obtained sintered body as a whole. If the time required for increase from 1700°C to 1770°C is too long, on the other hand, infiltration of nitrogen into the interior of the unfired body 5 will be excessive, thus likewise lowering the L* value of the finally obtained sintered body as a whole. The present inventors have found that when the maximum temperature for firing is below 1770°C, for example, the L* value of the unfired body 5 as a whole tends to increase in a suitable manner when the time required for temperature increase from 1700°C to maximum temperature is 60 to 180 minutes, and that when the maximum temperature for firing is 1770°C or higher, the L* value of the unfired body 5 as a whole tends to increase in a suitable manner when the time required for temperature increase from 1700°C to 1770°C is 60 to 180 minutes and the time required for increase from 1770°C to maximum temperature is 70 minutes or less.

### 2.1.4.2 Atmosphere at 1700°C or higher in temperature increase during firing

The present inventors have found that when the absolute nitrogen pressure is lower than 0.3 MPa in an atmosphere at 1700°C or higher in temperature increase during the firing, permeation of nitrogen into the unfired body 5 is insufficient and increase in the L* value at the grain boundary phase is also insufficient, tending to lower the L* value of the final sintered body as a whole. If the absolute nitrogen pressure is 1.1 MPa or higher, nitrogen excessively permeates into deeper locations of the unfired body 5, likewise tending to lower the L* value of the final sintered body as a whole. In contrast, if the atmosphere at 1700°C or higher in the temperature increase during the firing period contains nitrogen gas at 99.9 vol% or higher and has an absolute pressure of 0.3 MPa or higher and lower than 1.1 MPa, then the L* value of the unfired body 5 as a whole will tend to increase in a more suitable manner during the increase from 1700°C to 1770°C. If the heat treatment time is lengthened within the range of the invention under conditions with low absolute nitrogen pressure, then conversely shortening the heat treatment time within the range of the invention under conditions with high absolute nitrogen pressure will make it easier to ensure the desired brightness difference.

### 2.1.4.3 Time required for temperature increase from 1770°C to reach maximum temperature during firing

The present inventors have found that nitrogen infiltration and lowering of the L* value near the surface of the unfired body 5 takes place preferentially in the temperature range from 1770°C to the maximum temperature. That is, if the time from 1770°C to the maximum temperature is too long, the L* value on the surface of the unfired body 5 may be reduced and the L* value on the surface of the final sintered body may not be at or above the specified value. The present inventors have found that the time required for temperature increase from 1770°C to maximum temperature should be 70 minutes or less in order to ensure an L* value of 55 or greater in at least a portion of the surface of the final sintered body. There is no particular restriction on the lower limit for the time from 1770°C to maximum temperature. For example, when the maximum temperature during firing is 1770°C, the time required for increase from 1770°C to the maximum temperature is 0 minutes.

### 2.1.4.4 Holding time at maximum temperature

The holding time at the maximum temperature may be a time such that the entire unfired body 5 is sufficiently densified, and the optimal time may vary depending on the size of the sintered body. The holding time will generally be a minimum of 2 hours. If the holding time is too long, on the other hand, infiltration of nitrogen into the unfired body 5 will become an issue, and therefore the maximum time is preferably 16 hours. Once the maximum temperature has been reached, the unfired body 5 becomes densified to a certain degree, and increasing or decreasing the holding time in this step makes it difficult for interior changes in color tone to occur.

Using the production method of the first mode, it is possible to obtain a silicon nitride sintered body having multiple crystal grains and a grain boundary phase that binds the crystal grains together, and having an L* value of 55 or greater on at least a portion of the surface. The silicon nitride sintered body in this case may have an L* value of 55 or greater for both the surface and a cross-section, for example.

### 2.2 Second mode

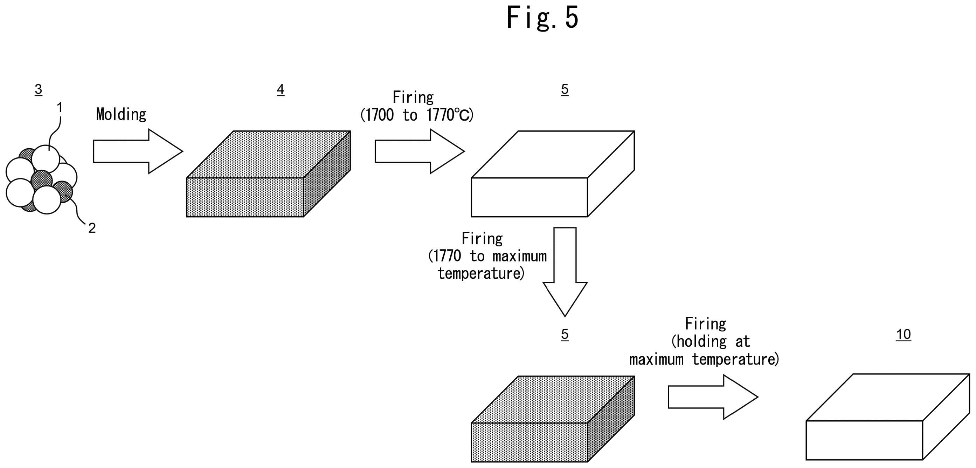

As shown in Fig. 5, the method for producing the silicon nitride sintered body according to the second mode is characterized by comprising:
kneading silicon nitride powder 1 and secondary starting powder 2 to obtain granules 3, and
molding and firing the granules 3,
wherein
the maximum temperature during firing is 1830°C or higher,
the atmosphere at 1700°C or higher during temperature increase in the firing period comprises nitrogen gas at 99.9 vol% or greater and has an absolute pressure of 0.3 MPa or higher and lower than 1.1 MPa,
the time required for temperature increase from 1700°C to 1770°C during the firing period is 60 to 180 minutes, and
the holding time at the maximum temperature during the firing period is 4 to 16 hours.

In the production method according to the second mode, the "silicon nitride powder", "secondary starting powder", "kneading and granulation of powder" and "molding of granules" may be the same as for the first mode. Explanation of these terms will be omitted here.

### 2.2.1 Time required for temperature increase from 1700°C to 1770°C

As mentioned above, increase in the L* value of the unfired body 5 as a whole is predominant in the temperature range from 1700°C to 1770°C, and when the time required for temperature increase from 1700°C to 1770°C is 60 to 180 minutes, the L* value of the unfired body 5 as a whole tends to increase in a suitable manner.

### 2.2.2 Atmosphere at 1700°C or higher during temperature increase during firing

As mentioned above, if the atmosphere at 1700°C or higher in the temperature increase during the firing period contains nitrogen gas at 99.9 vol% or higher and has an absolute pressure of 0.3 MPa or higher and lower than 1.1 MPa, then the L* value of the unfired body 5 as a whole will tend to increase in a more suitable manner during the increase from 1700°C to 1770°C.

### 2.2.3 Time required for temperature increase from 1770°C to reach maximum temperature during firing

As mentioned above, nitrogen infiltration and lowering of the L* value near the surface of the unfired body 5 takes place preferentially in the temperature range from 1770°C to the maximum temperature. In the production method according to the second mode, there is no restriction on the time for increase from 1770°C to the maximum temperature, unlike in the first mode. In the production method according to the second mode, even if the L* value on the surface of the unfired body 5 has decreased during the period from 1770°C to reaching the maximum temperature, if the holding time at the maximum temperature described below is 4 hours or longer, then decomposition product with a high L* value will be produced on the surface of the unfired body 5 so that the L* value of the surface of the final sintered body will be at least the specified value.

### 2.2.4 Holding time at maximum temperature

In the production method of the second mode, the holding time at the maximum temperature of 1830°C or higher is 4 to 16 hours. The present inventors have found that some of the structural substances on the surface of the unfired body 5 decompose in a temperature range of 1830°C or higher. Such decomposition products have high L* values. In other words, the desired brightness can be ensured by the decomposition phase produced on the surface of the unfired body 5. If the maximum temperature exceeds 1870°C, however, sublimation decomposition of silicon nitride may occur even up to the interior of the sintered body and the mechanical properties may significantly deteriorate. In this regard, the maximum temperature during firing may be 1830°C or higher, and is preferably 1830°C to 1870°C. The present inventors have found that when the holding time at the maximum temperature is 4 hours or longer, the unfired body 5 as a whole is adequately densified and the aforementioned decomposition phase forms in a suitable manner on the surface of the unfired body 5, resulting in an L* value of 55 or greater on the surface. If the holding time is too long, on the other hand, nitrogen may infiltrate into the unfired body 5, while decomposition may occur through to the interior and impair the mechanical properties of the sintered body, and therefore the maximum time is preferably 16 hours.

Using the production method of the second mode, it is possible to obtain a silicon nitride sintered body having multiple crystal grains and a grain boundary phase that binds the crystal grains together, and having an L* value of 55 or greater on at least a portion of the surface. The silicon nitride sintered body in this case may have a section with an L* value of lower than 55 in a cross-section, for example.

### 2.3 Other aspects

By employing a low-melting-point crystalline substance or a low-softening-point glassy substance as the material composing the grain boundary phase, it is possible to obtain a silicon nitride sintered body that is dense at low temperature, but this tends to lower the L* value of the sintered body as a whole. In the production method of the disclosure, therefore, it is necessary to select a material with a high melting point or softening point as the material composing the grain boundary phase. Specifically, as mentioned above, a secondary starting material with a high melting point or softening point may be selected.

As mentioned above, in a temperature range of 1700°C or higher, limiting the absolute pressure in the furnace to below 0.3 MPa results in insufficient permeation of nitrogen into the interior of the unfired body 5, making it difficult to ensure at least the specified brightness for the final fired body. In the production method of the disclosure, the color tone can be controlled by varying the nitrogen gas pressure depending on the temperature range, within the aforementioned pressure range of 0.3 MPa or higher and lower than 1.1 MPa. Using Ar as the atmosphere gas, on the other hand, makes it impossible for nitrogen to infiltrate into the unfired body 5. In other words, it is difficult to employ an atmosphere gas composed mainly of Ar at a temperature of 1700°C or higher where infiltration of nitrogen is required. In a temperature range of 1700°C or lower, however, the gas type and pressure may be selected as appropriate from the viewpoint of economy, and a gas other than nitrogen may be employed.

The sintered body produced by the production method of the disclosure ensures a high L* value on the unmachined surface (sintered surface), and is therefore advantageous in terms of cost since it requires no surface treatment. The production method of the disclosure may also comprise molding and firing of the granules in the manner described above to obtain a sintered body 10, followed by surface treatment of the sintered body 10 to expose a surface with an L* value of 55 or greater. The surface treatment is not particularly restricted. For example, the surface of the sintered body 10 may be subjected to mechanical polishing or grinding to remove at least a portion of the surface layer of the sintered body 10 and expose the interior of the sintered body 10, thereby ensuring an L* value of 55 or greater on the surface of the sintered body 10 from which the surface layer has been removed.

### 3. Additional notes

The method for producing a silicon nitride sintered body of the disclosure is industrially useful and allows production of large-sized sintered bodies having a thickness or diameter of 10 mm or greater and a long side or axial length of 100 mm or greater. The silicon nitride sintered body of the disclosure has a high L* value of 55 or greater on at least a portion of the surface, and is resistant to absorption of radiant heat on the surface. The silicon nitride sintered body of the disclosure also maintains consistent mechanical properties without softening even at high temperatures of above 1500°C. In other words, it can also be used as a part for use in high-temperature environments. For example, when the silicon nitride sintered body of the disclosure is used as a transport roller or conveyor beam or firing setter for use inside a heating furnace, so that the side of the silicon nitride sintered body with an L* value of 55 or greater is facing the irradiated side, dissipation of heat inside the furnace can be reduced, contributing to energy savings and stabilization of the temperature conditions of the heating furnace. A black-to-dark gray silicon nitride sintered body is problematic in that it may be difficult to discern surface contamination. A silicon nitride sintered body having an L* value of 55 or greater allows cleanliness to be immediately and visibly judged, in the field of precision equipment and semiconductors which require high cleanliness. Color may also be utilized for the purpose of design. While only black colors have been usable with conventional silicon nitride, the silicon nitride sintered body of the disclosure allows light grayish white colors to be utilized as designs.

### EXAMPLES

The present invention will now be further described using Examples, with the understanding that these Examples are not intended to be limitative on the invention. The invention may be applied under a variety of different conditions that do not fall outside of its gist and that allow its object to be achieved.

### 1. Example 1

### 1.1 Kneading and granulation of starting materials

A binder and a dispersing material were added to a starting material comprising silicon oxide (2 mass%), yttrium oxide (2 mass%) and commercially available high-purity silicon nitride powder (purity: 98.98) as the remainder, and the components were mixed using ceramic balls in a ceramic liner, with purified water as the solvent. The obtained slurry was subjected to airflow drying (by spray drying) to obtain granules.

### 1.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 1.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.5 MPa. The maximum temperature during firing was 1830°C, the time required for temperature increase from 1700°C to 1770°C was 80 minutes, the time required from 1770°C to 1800°C was 20 minutes and the time required from 1800°C to 1830°C was 20 minutes, with each temperature increase at a fixed rate. After reaching the maximum temperature of 1830°C, the body was held for 4 hours at the maximum temperature and then cooled to obtain a sintered body for Example 1.

### 1.4 Evaluation of sintered body

### 1.4.1 Visual observation

The obtained sintered body had a square surface with 121 mm sides, and a sheet form with a thickness of 26 mm. Upon visually observing the sintered body, the surface of the sintered body was found to have an extremely bright, nearly white, grayish white color.

### 1.4.2 Color tone measurement

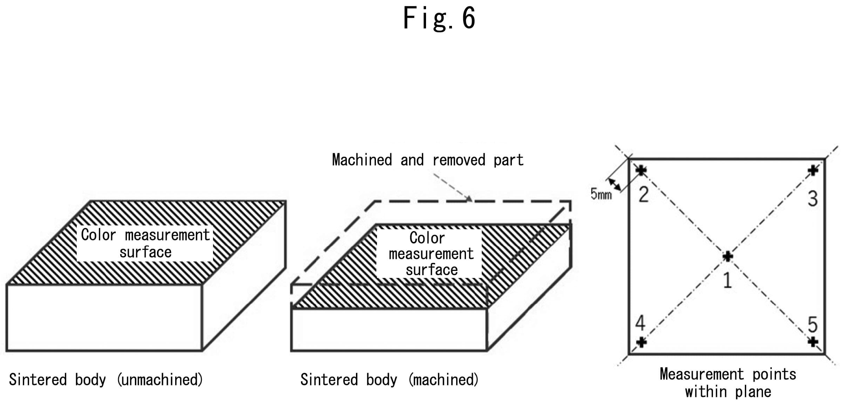

The color tone of the obtained sintered body was measured. The colorimeter used for measurement was a C50µ by Suga Test Instruments Co., Ltd., and the L*a*b* value was calculated under conditions with illumination: 45°, bidirectional, light reception: 0°, light source: D65, measuring region: φ0.2 mm. As shown in Fig. 6, the color tone on the surface of the sintered body (sintered surface) was measured first. Either one of the front and back surfaces with 121 mm sides was measured for color tone at a total of 5 locations: a location near the center, and locations 5 mm from each of the 4 corners toward the center. The results are shown in Table 1. As shown in Table 1, the L* values at the 5 locations were in the range of 68 to 70.

**[Table 1]**

| Example 1 (unmachined surface) | |
|---|---|
| Measurement point | L* |
| 1 | 69 |
| 2 | 70 |
| 3 | 69 |
| 4 | 68 |
| 5 | 69 |

The surface of the sintered body was then machined and the color tone of the machined surface was measured, as shown in Fig. 6. When the sintered surface was removed from the sintered body of Example 1 by machining, a slightly dark color surface appeared from the interior of the sintered body, and further machining resulted in appearance of a light grayish white surface. The machining allowance up to this point was approximately 3 mm. For the machined surface as well, the color tone was measured at a total of 5 locations: a location near the center of the surface and locations 5 mm from each of the 4 corners toward the center. The results are shown in Table 2. As shown in Table 2, the L* values at the 5 locations were in the range of 58 to 61.

**[Table 2]**

| Example 1 (machined surface) | |
|---|---|
| Measurement point | L* |
| 1 | 60 |
| 2 | 58 |
| 3 | 60 |
| 4 | 61 |
| 5 | 59 |

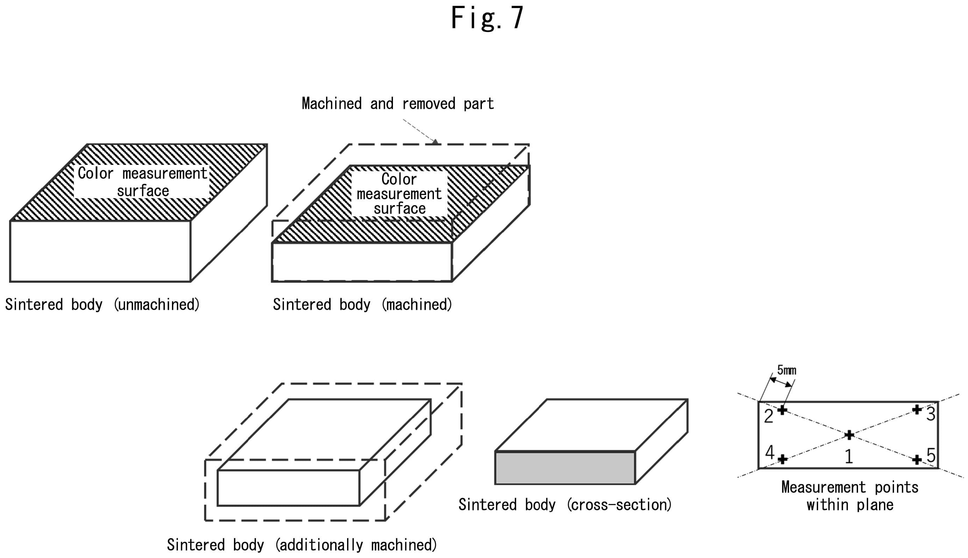

Next, as shown in Fig. 7, the remaining 5 sides of the sintered body which had been machined on one side as described above were also subjected to additional machining to remove the sintered surface, until a light grayish white color appeared. The machining allowance on each side was approximately 3 mm, and the piece was machined into a final plate material having 115 mm sides and 20 mm thickness, and with all of the sides exhibiting a light grayish white color. The sintered body was cut near the center of a side, and the color tone of the cross-section was also evaluated. The cross-section was light grayish white, and no color irregularities were observed. For the cross-section as well, the color tone was measured at a total of 5 locations: a location near the center of the surface and locations 5 mm from each of the 4 corners toward the center. The results are shown in Table 3. As shown in Table 3, the L* values at the 5 locations were in the range of 60 to 61.

**[Table 3]**

| Example 1 (cross-section) | |
|---|---|
| Measurement point | L* |
| 1 | 61 |
| 2 | 60 |
| 3 | 60 |
| 4 | 61 |
| 5 | 60 |

### 1.4.3 Crystal phase and density analysis

The crystal phase in the sintered body was analyzed by X-ray diffraction. Upon first analyzing the crystal phase on the unmachined surface, two different crystals were confirmed, which were silicon nitride and Y₂Si₃O₃N₄. Y₂Si₃O₃N₄ is a crystal produced by sublimation decomposition between silicon nitride and the grain boundary phase, and it is characterized by having a large L* value. Upon next analyzing the crystal phase on the machined surface, three different crystals were confirmed, which were silicon nitride, Si₂N₂O and Y₂Si₂O₇. Si₂N₂O and Y₂Si₂O₇ formed a grain boundary phase in the sintered body. No SiC peak was observed in either the unmachined surface or machined surface, and there was no observed broad reflection which would indicate the presence of a glass phase. Calculation for each of the crystals on the machined surface from a previously measured calibration curve resulted in 96.1 mass% for silicon nitride, 0.8 mass% for Si₂N₂O and 3.1 mass% for Y₂Si₂O₇. The theoretical density of the crystals was calculated to be 3.20 g/cm³. The density on the machined surface was measured to be 3.07 g/cm³. The relative density of the sintered body was calculated to be 96%.

### 1.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 8 ppm, Fe: 17 ppm, Co: <0.1 ppm and Ni: 1 ppm, for a total content of about 26 ppm. These impurities are believed to have been derived mainly from the silicon nitride starting material.

### 2. Example 2

### 2.1 Kneading of starting materials

A binder and a dispersing material were added to a starting material comprising silicon oxide (3 mass%), yttrium oxide (1 mass%), magnesium oxide (2 mass%) and commercially available high-purity silicon nitride powder (purity: 98.98%) as the remainder, and the components were mixed using ceramic balls in a ceramic liner, with purified water as the solvent. The obtained slurry was subjected to airflow drying (by spray drying) to obtain granules.

### 2.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 2.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.7 MPa. The temperature was increased at a constant rate, with 1770°C as the maximum temperature during firing and a time of 60 minutes for increase from 1700°C to 1770°C. After reaching the maximum temperature of 1770°C, the body was held for 4 hours at the maximum temperature and then cooled to obtain a sintered body for Example 2.

### 2.4 Evaluation of sintered body

### 2.4.1 Visual observation

The obtained sintered body had a square surface with 120 mm sides, and a sheet form with a thickness of 26 mm. Upon visually observing the sintered body, the surface of the sintered body was found to have a gray color.

### 2.4.2 Color tone measurement

The color tone of the obtained sintered body was measured. The colorimeter used for measurement was a C50µ by Suga Test Instruments Co., Ltd., and the L*a*b* value was calculated under conditions with illumination: 45°, bidirectional, light reception: 0°, light source: D65, measuring region: φ0.2 mm. As shown in Fig. 6, the color tone on the surface of the sintered body (sintered surface) was measured first. Either one of the front and back surfaces with 120 mm sides was measured for color tone at a total of 5 locations: a location near the center, and locations 5 mm from each of the 4 corners toward the center. The results are shown in Table 4. As shown in Table 4, the L* values at the 5 locations were in the range of 47 to 50.

**[Table 4]**

| Example 2 (unmachined surface) | |
|---|---|
| Measurement point | L* |
| 1 | 50 |
| 2 | 48 |
| 3 | 47 |
| 4 | 47 |
| 5 | 48 |

The surface of the sintered body was then machined and the color tone of the machined surface was measured, as shown in Fig. 6. When the sintered surface of the sintered body of Example 2 was removed by machining, a light gray surface appeared from the interior. The machining allowance up to this point was about 1.5 mm. For the machined surface as well, the color tone was measured at a total of 5 locations: a location near the center of the surface and locations 5 mm from each of the 4 corners toward the center. The results are shown in Table 5. As shown in Table 5, the L* values at the 5 locations were in the range of 64 to 67. Specifically, machining caused exposure to a surface with an L* value of 55 or greater.

**[Table 5]**

| Example 2 (machined surface) | |
|---|---|
| Measurement point | L* |
| 1 | 64 |
| 2 | 67 |
| 3 | 67 |
| 4 | 66 |
| 5 | 65 |

Next, as shown in Fig. 7, the remaining 5 sides of the sintered body which had been machined on one side as described above were also subjected to additional machining to remove the sintered surface, until a light grayish white color appeared. The machining allowance on each side was approximately 1.5 mm, and the piece was machined into a final plate material having 117 mm sides and 23 mm thickness, and with all of the sides exhibiting a light grayish white color. The sintered body was cut near the center of a side, and the color tone of the cross-section was also evaluated. The cross-section was light gray, and no color irregularities were observed. For the cross-section as well, the color tone was measured at a total of 5 locations: a location near the center of the surface and locations 5 mm from each of the 4 corners toward the center. The results are shown in Table 6. As shown in Table 6, the L* values at the 5 locations were in the range of 65 to 67.

**[Table 6]**

| Example 2 (cross-section) | |
|---|---|
| Measurement point | L* |
| 1 | 66 |
| 2 | 67 |
| 3 | 67 |
| 4 | 65 |
| 5 | 65 |

### 2.4.3 Crystal phase and density analysis

The crystal phase in the sintered body was analyzed by X-ray diffraction. Upon first analyzing the crystal phase on the unmachined surface, silicon nitride was confirmed, together with broad reflection indicating the presence of a glass phase. Upon next analyzing the crystal phase on the machined surface, silicon nitride was confirmed, together with broad reflection indicating the presence of a glass phase, similar to the unmachined surface. No SiC peak was observed in either the unmachined surface or the machined surface. Upon calculating the silicon nitride content based on Rietveld analysis, the silicon nitride content was calculated to be 94 mass%. Since the water absorption percentage of the sintered body was 0, the relative density of the sintered body was estimated to be 93% or higher.

### 2.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 9 ppm, Fe: 25 ppm, Co: <0.1 ppm and Ni: 6 ppm, for a total content of about 30 ppm. These impurities are believed to have been derived mainly from the silicon nitride starting material.

### 3. Example 3

### 3.1 Kneading of starting materials

A binder and a dispersing material were added to a starting material comprising silicon oxide (5 mass%), ytterbium oxide (6 mass%) and commercially available high-purity silicon nitride powder (purity: 98.98%) as the remainder, and the components were mixed using ceramic balls in a ceramic liner, with purified water as the solvent. The obtained slurry was subjected to airflow drying (by spray drying) to obtain granules.

### 3.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 3.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.7 MPa. The temperature was increased at a constant rate, with 1750°C as the maximum temperature during firing and a time of 100 minutes for increase from 1700°C to 1750°C. After reaching the maximum temperature of 1750°C, the body was held for 8 hours at the maximum temperature and then cooled to obtain a sintered body for Example 3.

### 3.4 Evaluation of sintered body

### 3.4.1 Visual observation

The obtained sintered body had a square surface with 121 mm sides, and a sheet form with a thickness of 25 mm. Upon visually observing the sintered body, the surface of the sintered body was found to have a slightly light gray color.

### 3.4.2 Color tone measurement

The color tone of the obtained sintered body was measured. The colorimeter used for measurement was a C50µ by Suga Test Instruments Co., Ltd., and the L*a*b* value was calculated under conditions with illumination: 45°, bidirectional, light reception: 0°, light source: D65, measuring region: φ0.2 mm. As shown in Fig. 6, the color tone on the surface of the sintered body (sintered surface) was measured first. Either one of the front and back surfaces with 120 mm sides was measured for color tone at a total of 5 locations: a location near the center, and locations 5 mm from each of the 4 corners toward the center. The results are shown in Table 7. As shown in Table 7, the L* values at the 5 locations were in the range of 52 to 53.

**[Table 7]**

| Example 3 (unmachined surface) | |
|---|---|
| Measurement point | L* |
| 1 | 53 |
| 2 | 53 |
| 3 | 53 |
| 4 | 52 |
| 5 | 53 |

The surface of the sintered body was then machined and the color tone of the machined surface was measured, as shown in Fig. 6. When the sintered surface of the sintered body of Example 3 was removed by machining, an even lighter gray surface appeared from the interior. The machining allowance up to this point was about 0.7 mm. For the machined surface as well, the color tone was measured at a total of 5 locations: a location near the center of the surface and locations 5 mm from each of the 4 corners toward the center. The results are shown in Table 8. As shown in Table 8, the L* values at the 5 locations were in the range of 65 to 66. Specifically, machining caused exposure to a surface with an L* value of 55 or greater.

**[Table 8]**

| Example 3 (machined surface) | |
|---|---|
| Measurement point | L* |
| 1 | 65 |
| 2 | 65 |
| 3 | 66 |
| 4 | 66 |
| 5 | 65 |

Next, as shown in Fig. 7, the remaining 5 sides of the sintered body which had been machined on one side as described above were also subjected to additional machining to remove the sintered surface, until an even lighter gray color appeared. The machining allowance on each side was approximately 0.7 mm, and the piece was machined into a final plate material having 118.6 mm sides and 23.6 mm thickness, and with all of the sides exhibiting a light gray color. The sintered body was cut near the center of a side, and the color tone of the cross-section was also evaluated. The cross-section was light grayish white, and no color irregularities were observed. For the cross-section as well, the color tone was measured at a total of 5 locations: a location near the center of the surface and locations 5 mm from each of the 4 corners toward the center. The results are shown in Table 9. As shown in Table 9, the L* values at the 5 locations were in the range of 65 to 66.

**[Table 9]**

| Example 3 (cross-section) | |
|---|---|
| Measurement point | L* |
| 1 | 66 |
| 2 | 66 |
| 3 | 65 |
| 4 | 65 |
| 5 | 66 |

### 3.4.3 Crystal phase and density analysis

The crystal phase in the sintered body was analyzed by X-ray diffraction. Upon first analyzing the crystal phase on the unmachined surface, three different crystals were confirmed, which were silicon nitride, Si₂N₂O and Yb₂Si₂O₇. Upon next analyzing the crystal phase on the machined surface, the same three different crystals were confirmed, i.e. silicon nitride, Si₂N₂O and Yb₂Si₂O₇. Si₂N₂O and Yb₂Si₂O₇ formed a grain boundary phase in the sintered body. No SiC peak was observed in either the unmachined surface or machined surface, and there was no observed broad reflection which would indicate the presence of a glass phase. Calculation for each of the crystals on the machined surface from a previously measured calibration curve resulted in 88.6 mass% for silicon nitride, 3.9 mass% for Si₂N₂O and 7.5 mass% for Yb₂Si₂O₇. The theoretical density of the crystals was calculated to be 3.40 g/cm³. The density on the machined surface was measured to be 3.23 g/cm³. The relative density of the sintered body was calculated to be 95%.

### 3.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 2 ppm, Fe: 12 ppm, Co: <0.1 ppm and Ni: 1 ppm, for a total content of about 15 ppm. These impurities are believed to have been derived mainly from the silicon nitride starting material.

### 4. Comparative Example 1

### 4.1 Kneading of starting materials

A binder and a dispersing material were added to a starting material comprising silicon oxide (2 mass%), aluminum oxide (4 mass%), yttrium oxide (4 mass%) and commercially available silicon nitride powder (purity: 98.40%) as the remainder, and the components were mixed using ceramic balls in a ceramic liner, with purified water as the solvent. The obtained slurry was subjected to airflow drying (by spray drying) to obtain granules.

### 4.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 4.3 Degreasing and firing

The obtained green body was degreased in an air atmosphere at 350°C and then fired in the following manner. The firing was carried out while pressurizing using nitrogen gas with a purity of 99.99% and controlling the furnace to an absolute pressure of 0.4 MPa. The maximum temperature during firing was 1800°C, the time required for temperature increase from 1700°C to 1770°C was 80 minutes and the time required for increase from 1770°C to maximum temperature was 35 minutes, with each temperature increase at a fixed rate. After reaching the maximum temperature of 1800°C, the body was held for 4 hours at the maximum temperature and then cooled to obtain a sintered body for Comparative Example 1.

### 4.4 Evaluation of sintered body

### 4.4.1 Visual observation

The obtained sintered body had a square surface with 120 mm sides, and a sheet form with a thickness of 26 mm. Upon visually observing the sintered body, the surface of the sintered body was found to have a nearly black, dark gray color.

### 4.4.2 Color tone measurement

The color tone of the obtained sintered body was measured. The colorimeter used for measurement was a C50µ by Suga Test Instruments Co., Ltd., and the L*a*b* value was calculated under conditions with illumination: 45°, bidirectional, light reception: 0°, light source: D65, measuring region: φ0.2 mm. As shown in Fig. 6, the color tone on the surface of the sintered body (sintered surface) was measured first. For one surface from among the front and back surfaces with 120 mm sides, the color tone was measured at a total of 5 locations: a location near the center and locations 5 mm from each of the 4 corners toward the center. The results are shown in Table 10. As shown in Table 10, the L* values at the 5 locations were in the range of 29 to 30.

**[Table 10]**

| Comp. Example 1 (unmachined surface) | |
|---|---|
| Measurement point | L* |
| 1 | 30 |
| 2 | 30 |
| 3 | 30 |
| 4 | 29 |
| 5 | 30 |

The surface of the sintered body was then machined and the color tone of the machined surface was measured, as shown in Fig. 6. The sintered surface of the sintered body of Comparative Example 1 was removed by machining, with no observable change in color tone even with machining to a depth of 10 mm. For the machined surface up to a depth of 10 mm as well, the color tone was measured at a total of 5 locations: a location near the center of the surface and locations 5 mm from each of the 4 corners toward the center. The results are shown in Table 11. As shown in Table 11, the L* values at the 5 locations were in the range of 30 to 32.

**[Table 11]**

| Comp. Example 1 (machined surface) | |
|---|---|
| Measurement point | L* |
| 1 | 32 |
| 2 | 32 |
| 3 | 31 |
| 4 | 30 |
| 5 | 30 |

### 4.4.3 Crystal phase and density analysis

The crystal phase in the sintered body was analyzed by X-ray diffraction. Upon first analyzing the crystal phase on the unmachined surface, silicon nitride and SiC were confirmed, together with a slight peak of a foreign crystal, and broad reflection indicating the presence of a glass phase. Upon next analyzing the crystal phase on the machined surface, silicon nitride and SiC were confirmed, together with a slight peak of a foreign crystal, and broad reflection indicating the presence of a glass phase, similar to the unmachined surface. Upon calculating the content of each crystal phase based on Rietveld analysis, silicon nitride was calculated to be 92 mass% and SiC was calculated to be 200 ppm. Since the water absorption percentage of the sintered body was 0, the relative density of the sintered body was estimated to be 93% or higher.

### 4.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 2100 ppm, Fe: 1090 ppm, Co: 0.1 ppm and Ni: 10 ppm, for a total content of about 3200 ppm. These impurities are believed to have been derived mainly from the silicon nitride starting material.

### 5. Comparative Example 2

### 5.1 Kneading of starting materials

A binder and a dispersing material were added to a starting material comprising silicon oxide (7 mass%), yttrium oxide (1 mass%), magnesium oxide (3 mass%) and commercially available high-purity silicon nitride powder (purity: 98.96%) as the remainder, and the components were mixed using ceramic balls in a ceramic liner, with purified water as the solvent. The obtained slurry was subjected to airflow drying (by spray drying) to obtain granules.

### 5.2 Molding

The obtained granules were packed into a 150 mm × 150 mm square die and molded with a uniaxial press under 22 tons to obtain a uniaxial molded article. The obtained uniaxial molded article was sealed with a nylon pack and subjected to hydrostatic pressing at 1.4 t/cm² to fabricate a green body.

### 5.3 Degreasing and firing

The obtained green body was degreased in an air atmosphere at 350°C and then fired in the following manner. The firing was carried out by flowing nitrogen gas with a purity of 99.99% into the furnace, at atmospheric pressure without pressurization inside the furnace. After reaching the maximum temperature of 1650°C during firing, the body was held for 4 hours at the maximum temperature and then cooled to obtain a sintered body for Comparative Example 2.

### 5.4 Evaluation of sintered body

### 5.4.1 Visual observation

The obtained sintered body had a square surface with 120 mm sides, and a sheet form with a thickness of 25 mm. Upon visually observing the sintered body, the surface of the sintered body was found to have a gray color.

### 5.4.2 Color tone measurement

The color tone of the obtained sintered body was measured. The colorimeter used for measurement was a C50µ by Suga Test Instruments Co., Ltd., and the L*a*b* value was calculated under conditions with illumination: 45°, bidirectional, light reception: 0°, light source: D65, measuring region: φ0.2 mm. As shown in Fig. 6, the color tone on the surface of the sintered body (sintered surface) was measured first. For one surface from among the front and back surfaces with 120 mm sides, the color tone was measured at a total of 5 locations: a location near the center and locations 5 mm from each of the 4 corners toward the center. The results are shown in Table 12. As shown in Table 12, the L* values at the 5 locations were in the range of 45 to 47.

**[Table 12]**

| Comp. Example 2 (unmachined surface) | |
|---|---|
| Measurement point | L* |
| 1 | 47 |
| 2 | 47 |
| 3 | 47 |
| 4 | 47 |
| 5 | 45 |

The surface of the sintered body was then machined and the color tone of the machined surface was measured, as shown in Fig. 6. The sintered body of Comparative Example 2 had a gradually darker color tone with progressive machining, and therefore machining was stopped at a depth of 10 mm. For the machined surface up to a depth of 10 mm as well, the color tone was measured at a total of 5 locations: a location near the center of the surface and locations 5 mm from each of the 4 corners toward the center. The results are shown in Table 13. As shown in Table 13, the L* values at the 5 locations were in the range of 32 to 36.

**[Table 13]**

| Comp. Example 2 (machined surface) | |
|---|---|
| Measurement point | L* |
| 1 | 36 |
| 2 | 35 |
| 3 | 32 |
| 4 | 36 |
| 5 | 36 |

### 5.4.3 Crystal phase and density analysis

The crystal phase in the sintered body was analyzed by X-ray diffraction. First, when the crystal phase on the unmachined surface was analyzed, silicon nitride was confirmed, together with broad reflection indicating the presence of a glass phase. When the crystal phase on the machined surface was then analyzed, silicon nitride was confirmed, together with broad reflection indicating the presence of a glass phase, similar to the unmachined surface. No SiC was observed in either the unmachined surface or the machined surface. Upon calculating the silicon nitride content based on Rietveld analysis, the silicon nitride content was calculated to be 94 mass%. Since the water absorption percentage of the sintered body was 0, the relative density of the sintered body was estimated to be 93% or higher.

### 5.4.4 Analysis of impurities

In order to evaluate impurities in the sintered body, a portion of the sintered body was crushed with an agate mortar and subjected to pressure acid decomposition with a mixed acid, and then measured by ICP mass spectrometry. As a result, the contents were Al: 11 ppm, Fe: 17 ppm, Co: 0.1 ppm and Ni: 1 ppm, for a total content of about 29 ppm. These impurities are believed to have been derived mainly from the silicon nitride starting material.

### 6. Summary

Table 14 shows the results for each of Examples 1 to 3 and Comparative Examples 1 and 2.

**[Table 14]**

| | Example 1 | Example 2 | Example 3 | Comp. Example 1 | Comp. Example 2 |
|---|---|---|---|---|---|
| Maximum value for L* on unmachined surface | 70 | 50 | 53 | 30 | 47 |
| Maximum value for L* on machined surface | 61 | 67 | 66 | 32 | 36 |
| Total concentration of Al, Fe, CO, Ni | 26 ppm | 30 ppm | 15 ppm | 3200 ppm | 29 ppm |
| SiC concentration | Not detected | Not detected | Not detected | 200 ppm | Not detected |
| Grain boundary phase | Y₂Si₃O₃N₄ or Si₂N₂O and Y₂Si₂O₇ | Glass phase | Si₂N₂O and Yb₂Si₂O₇ | Glass phase and crystal phase | Glass phase |

### REFERENCE SIGNS LIST

1 Silicon nitride powder
2 Secondary starting powder
3 Granules
4 Molded body
5 Unfired body
10 Silicon nitride sintered body
11 First section
12 Second section

## Claims

1. A silicon nitride sintered body,
having multiple crystal grains and a grain boundary phase that bonds the crystal grains together,
having an L* value of 55 or greater on at least a portion of a surface of the sintered body, and
having a thickness of 10 mm or greater.

2. The silicon nitride sintered body according to claim 1,
having an L* value of 60 or greater on at least a portion of the surface.

3. The silicon nitride sintered body according to claim 1, wherein
the total content of Al, Fe, Co and Ni is less than 1000 ppm and
the SiC content is less than 2000 ppm.

4. The silicon nitride sintered body according to claim 1, wherein
the grain boundary phase contains a crystalline component.

5. The silicon nitride sintered body according to claim 4, wherein
the grain boundary phase contains, as the crystalline component, one or more selected from the group consisting of Si₂N₂O, Y₂Si₂O₇, Yb₂Si₂O₇, Y₂Si₃O₃N₄ and YbSi₃O₃N₄.

6. A method for producing the silicon nitride sintered body according to any one of claims 1 to 5, the method comprising:
kneading silicon nitride powder and secondary starting powder to obtain granules, and
molding and firing the granules,
wherein
the maximum temperature during firing is 1720°C or higher and lower than 1830°C,
the atmosphere at 1700°C or higher during temperature increase in the firing period comprises nitrogen gas at 99.9 vol% or greater and has an absolute pressure of 0.3 MPa or higher and lower than 1.1 MPa,
when the maximum temperature is lower than 1770°C, the time required for temperature increase from 1700°C to the maximum temperature during the firing period is 60 to 180 minutes,
when the maximum temperature is 1770°C or higher, the time required for temperature increase from 1700°C to 1770°C during the firing period is 60 to 180 minutes and the time required for temperature increase from 1770°C to the maximum temperature is 70 minutes or less, and
the holding time at the maximum temperature during the firing period is 16 hours or less.

7. The method for producing the silicon nitride sintered body according to claim 6, wherein
the method comprises molding and firing the granules to obtain a sintered body, and then subjecting the sintered body to surface treatment to expose the surface with an L* value of 55 or greater.

8. A method for producing the silicon nitride sintered body according to any one of claims 1 to 5, the method comprising:
kneading silicon nitride powder and secondary starting powder to obtain granules, and
molding and firing the granules,
wherein
the maximum temperature during firing is 1830°C or higher,
the atmosphere at 1700°C or higher during temperature increase in the firing period comprises nitrogen gas at 99.9 vol% or greater and has an absolute pressure of 0.3 MPa or higher and lower than 1.1 MPa,
the time required for temperature increase from 1700°C to 1770°C during the firing period is 60 to 180 minutes, and
the holding time at the maximum temperature during the firing period is 4 to 16 hours.
